# EUROPÄISCHE PATENTANMELDUNG

(11) **EP 0 684 160 A1**
(43) Veröffentlichungstag der Anmeldung: **29.11.1995**
(21) Anmeldenummer: 95107979.7
(22) Anmeldetag: 23.05.1995
(51) Int. Cl.: B60R 16/02

(54) **Kabelführungseinrichtung**

(30) Priorität: 27.05.1994 DE 4418658; 06.12.1994 DE 4443379
(71) Anmelder: W.L. GORE & ASSOCIATES GmbH, D-85636 Putzbrunn (DE)
(72) Erfinder: Schwirzer, Max, DE-91781 Weissenburg (DE); Klier, Jürgen, DE-63303 Dreieich (DE)
(74) Vertreter: Klunker . Schmitt-Nilson . Hirsch

(57) **Zusammenfassung**

Eine erfindungsgemäße Kabelführungseinrichtung zum Führen eines Kabels von einer ortsfesten Einrichtung zu einer um eine Drehachse schwenkbaren Einrichtung weist einen zur Drehachse konzentrischen Innenring (101) und einen dem Innenring (101) zugeordneten Kabeleinlaß (102), einen zur Drehachse konzentrischen Außenring (103), der um den Innenring (101) herum angeordnet ist, sowie einen dem Außenring (103) zugeordneten Kabelauslaß (104) auf, wobei der Innenring (101) und der Außenring (103) relativ zueinander um die Drehachse verdrehbar sind. Die Einrichtung weist ferner einen zur Drehachse zentrierten, im wesentlichen kreisringförmigen Kabelführungsformkörper (105), der zwischen dem Innenring (101) und dem Außenring (103) um die Drehachse drehbar gelagert ist, auf, wobei der Kabelführungsformkörper (105) einen von seinem Innendurchmesser zu seinem Außendurchmesser führenden Kabelführungsspalt (106) aufweist. Das Kabel ist ausgehend vom Kabeleinlaß (102) zwischen dem Innenring (101) und dem Kabelführungsformkörper (105), durch den Kabelführungsspalt (106) hindurch und zwischen dem Außenring (103) und dem Kabelführungsformkörper (105) zum Kabelauslaß (104) geführt. Bei einer erfindungsgemäßen Verwendung einer Kabelführungseinrichtung wird eine erfindungsgemäße Kabelführungseinrichtung zum Schaffen eines elektrischen Anschlusses einer in einem Lenkrad drehbar untergebrachten Airbag-Einheit an eine karosseriefest angeordnete Airbag-Steuereinheit eingesetzt, wobei die Kabelführungseinrichtung zwischen Lenkrad und Lenkstock, im Lenkstock oder im Lenkrad selbst angeordnet ist.

## Beschreibung

Die Erfindung betrifft eine Kabelführungseinrichtung, insbesondere zur elektrischen Verbindung einer in einem Kraftfahrzeuglenkrad eingebauten Airbag-Vorrichtung mit einer an der Kraftfahrzeugkarosserie befestigten Airbag-Steuerungseinrichtung, sowie die Verwendung einer Kabelführungseinrichtung in einem Kraftfahrzeug.

Bekanntlich handelt es sich bei einem Airbag um einen mit einem Gas füllbaren Prallschutzsack in einem Kraftfahrzeug, der beim Aufprall des Kraftfahrzeuges auf ein Hindernis durch eine Steuereinrichtung ausgelöst und in Bruchteilen von Sekunden aufgeblasen wird, um einen Aufprallschutz für Kraftfahrzeuginsassen zu schaffen. Hierdurch sollen zumindest größere Verletzungen bei den Kraftfahrzeuginsassen vermieden werden.

Üblicherweise wird die Airbag-Einrichtung im Pralltopf des Fahrzeuglenkrades installiert. Da die das Auslösen und Aufblähen des Airbags verursachende Steuereinrichtung außerhalb des Lenkrades installiert ist, ist es erforderlich, daß die elektrische Verbindung zwischen dem Airbag und den Steuereinrichtungen gewisse Relativdrehungen zwischen dem im Pralltopf des Lenkrades sich zusammen mit diesem mitdrehenden Airbag und der feststehenden Steuereinrichtung ermöglicht.

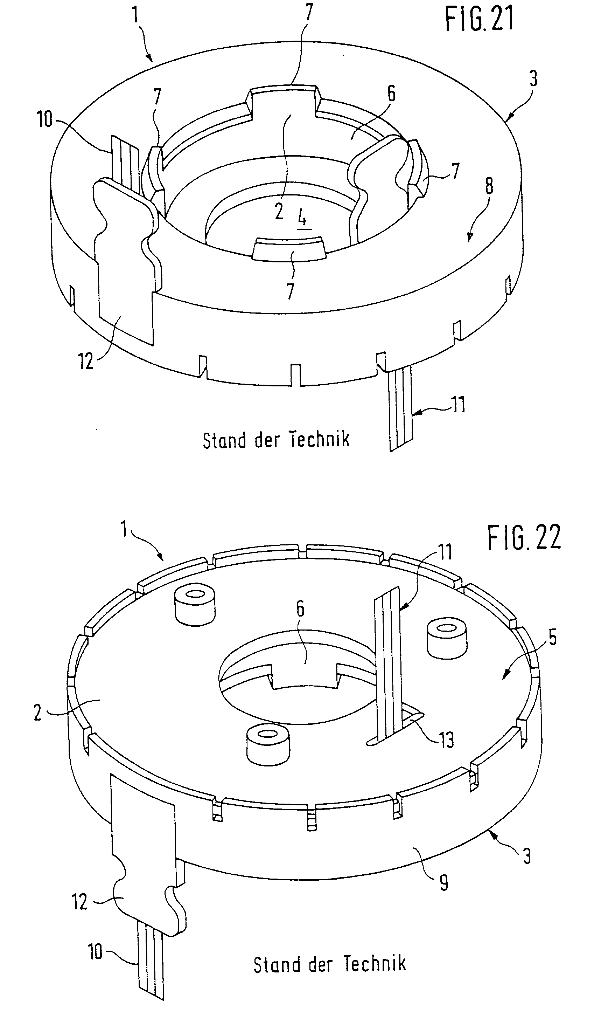

Zur Schaffung dieser elektrischen Verbindung ist es z.B. aus der Druckschrift DE-C1-42 23 308 bekannt, eine Spiralkabeldose zu verwenden, in der ein spiralförmig aufgewickeltes Flachkabel aufgenommen ist. Diese in Fign. 21 und 22 dargestellte bekannte Spiralkabeldose ist zwischen dem Denkstock und dem Pralltopf des Lenkrades angeordnet, so daß Endbereiche des in der Spiralkabeldose aufgenommene Flachkabels zum einen zu dem im Pralltopf angeordneten Airbag und zum anderen zu der Steuereinrichtung, etwa durch den Lenkstock hindurch, geführt sind.

Die bekannte Spiralkabeldose 1 weist ein durch ein Innenteil der Spiralkabeldose 1 gebildetes Dosenunterteil 2 und ein durch ein Außenteil der Spiralkabeldose 1 gebildetes Dosenoberteil 3 auf. Bei auf das Dosenunterteil 2 aufgesetztem Dosenoberteil 3 ist dazwischenliegend ein Kabelaufnahmeraum gebildet, der zur Aufnahme einer Kabelspirale dient. Das Dosenunterteil 2 weist eine mit einer Mittenöffnung 4 versehene Ringscheibenwand 5 und eine im wesentlichen senkrecht zu dieser angeordnete Innenzylinderwand 6 auf. Die Innenzylinderwand 6 ist an ihrem oberen, von der Ringscheibenwand 5 abgewandten Rand mit über den Umfang verteilt angeordneten Rasteinrichtungen 7 versehen. Die Rasteinrichtungen 7 weisen nach außen gerichtete Rastfortsätze auf, die nach dem Zusammenfügen des Dosenunterteils 2 und des Dosenoberteils 3 hinter dem Innenumfangsrand einer mit einer Mittenöffnung versehenen Ringscheibenwand 8 des Dosenoberteils 3 einrasten und somit den Zusammenhalt der Dosenteile 2,3 lösbar sichern. Zur Bildung des Dosenoberteils 3 schließt am äußeren Umfangsrand der Ringscheibenwand 8 eine im wesentlichen senkrecht zu dieser angeordnete Außenzylinderwand 9 an. Zur Durchführung von Kabelenden 10,11 des die Kabelspirale bildenden Flachkabels und zur Ausbildung von Winkelendbereichen der Kabelspirale sind in der Außenzylinderwand 9 des Dosenoberteils 3 und in der Innenzylinderwand 6 des Dosenunterteils 2 Kabel durchführungen 12 bzw. 13 vorgesehen.

Bei der bekannten Spiralkabeldose sind, um einen ausreichenden Drehwinkel des Lenkrades, z.B. ca. 6 x 360°, zu ermöglichen, etwa 3,5 Meter Kabelzuschnitt erforderlich. Auch neigt die Kabelspirale dazu, durch die mit der Bewegung des Kraftfahrzeuges verbundenen Erschütterungen gegen das Dosenoberteil und das Dosenunterteil zu schlagen, wodurch unangenehme Geräusche hervorgerufen werden.

Aus der DE-Patentschrift 935 591 ist eine Schlauchführungsvorrichtung zur Führung von Schläuchen von einer ortsfesten Gasquelle zu einem drehbar angeordneten Brennschneidegerät bekannt, bei der ein Führungsring in einem Traggestell rollbar gelagert ist. Ein mit dem Führungsring mitrollender Käfigring trägt eine Anzahl drehbar gelagerter Rillenrollen, wobei die zu führenden Schläuche in eine um die Rillenrollen herum gelegten Schlaufe geführt werden.

Aus der Druckschrift FR-A-2 426 005 ist eine Kabelführungsvorrichtung zum Führen von elektrischen Kabeln von einem ortsfesten Tomographen-Steuergerät zu einer um eine Längsachse drehbaren Patientenliege bekannt, bei der ebenfalls eine Kabelschlaufe um an einem Drehkranz angeordnete drehbare Rollen gelegt ist.

Kabelführungsvorrichtungen dieser bekannten Art weisen den Nachteil auf, daß sie verhältnismäßig viele bewegbare Teile, insbesondere auf einem Drehkranz drehbar gelagerte Führungsrollen, aufweisen. Dies erschwert den Zusammenbau und erhöht die Gesamtkosten spürbar.

Aufgabe der Erfindung ist es, eine möglichst einfach aufgebaute, wenig Einzelteile aufweisende und wirtschaftlich zu fertigende Kabelführungsvorrichtung vorzusehen, durch die ein Kabel oder ein anderes langgestrecktes biegeschlaffes Teil von einer ortsfesten elektrischen Einrichtung zu einer dreh- oder schwenkbaren elektrischen Einrichtung, insbesondere von einer an einer Kraftfahrzeugkarosserie befestigten Airbag-Steuereinrichtung zu einem im Lenkradtopf befestigten Airbag-Prallsack, geführt werden kann, wobei möglichst wenig Kabel Verwendung finden soll und durch Erschütterungen verursachte Geräuschentwicklungen möglichst ausgeschaltet sein sollen.

Diese Aufgabe wird erfindungsgemäß gelöst durch die im Schutzanspruch 1 angegebene Kabelführungseinrichtung sowie durch die im Anspruch 7 angegebene Verwendung der Kabelführungseinrichtung zum Schaffen eines elektrischen Anschlusses einer in einem Lenkrad drehbar untergebrachten Airbag-Einheit an eine karosseriefest angeordnete Airbag-Steuereinheit. Den Unteransprüchen sind vorteilhafte Weiterbildungen entnehmbar.

Die erfindungsgemäße Kabelführungseinrichtung zum Führen eines Kabels von einer ortsfesten Einrichtung zu einer um eine Drehachse schwenkbaren Einrichtung weist einen zur Drehachse konzentrischen Innenring und einen dem Innenring zugeordneten Kabeleinlaß, einen zur Drehachse konzentrischen Außenring, der um den Innenring herum angeordnet ist, sowie einen dem Außenring zugeordneten Kabelauslaß auf, wobei der Innenring und der Außenring relativ zueinander um die Drehachse verdrehbar sind. Die Einrichtung weist ferner einen zur Drehachse zentrierten, im wesentlichen kreisringförmigen Kabelführungsformkörper, der zwischen dem Innenring und dem Außenring um die Drehachse drehbar gleiten kann, auf, wobei der Kabelführungsformkörper einen von seinem Innendurchmesser zu seinem Außendurchmesser führenden Kabelführungsspalt aufweist. Das Kabel ist ausgehend vom Kabeleinlaß zwischen dem Innenring und dem Kabelführungsformkörper, durch den Kabelführungsspalt hindurch und zwischen dem Außenring und dem Kabelführungsformkörper zum Kabelauslaß geführt.

Bei der erfindungsgemäßen Verwendung wird eine erfindungsgemäße Kabelführungseinrichtung zum Schaffen eines elektrischen Anschlusses einer in einem Lenkrad drehbar untergebrachten Airbag-Einheit an eine karosseriefest angeordnete Airbag-Steuereinheit eingesetzt, wobei die Kabelführungseinrichtung zwischen Lenkrad und Lenkstock, im Lenkstock oder im Lenkrad selbst angeordnet ist.

Bei einer Ausführungsform der Erfindung ist der Kabelführungskörper auf der unteren Ringscheibe mittels Gleitlagerung verdrehbar gehalten. Dabei kann der Kabelfühlungskörper durch die bei einer relativen Verdrehung von Außenring und Innenring zu einander entstehende Bewegung des zwischen Außenring und Innenring befindlichen Kabelbereichs bewegt werden.

Bei einer besonders bevorzugten anderen Ausführungsform ist der Kabelführungskörper mit Hilfe eines Getriebes drehbar, über welches die relative Drehbewegung zwischen Außenring und Innenring einen Drehantrieb für den Kabelführungskörper bewirkt. Bei dieser Ausführungsform wird der Kabelführungskörper durch die Drehbewegung, die von außen her auf die Kabelführungseinrichtung ausgeübt wird, zwangsweise verdreht. Dadurch ist das Kabel entlastet, das nun nicht mehr zum Drehantrieb des Kabelführungsformkörpers herangezogen zu werden braucht.

Das Getriebe kann nach Art eines Planetengetriebes mindestens ein am Kabelführungskörper drehbar gehaltenes Zahnrad und mindestens eine zur Drehachse konzentrische, mit dem Zahnrad kämmende ringförmige Zahnnut zwischen dem Außenring und dem Innenring aufweisen. Dabei ist ein äußerer Nutzahnrand der Zahnnut mit dem Außenring und ein innerer Nutzahnrand mit dem Innenring drehsteif verbunden, derart, daß sich die beiden Nutzahnräder bei einer relativen Drehbewegung zwischen Außenring und Innenring relativ zueinander drehen und dadurch das Zahnrad in eine kreisbahnförmige Bewegung innerhalb der Zahnnut versetzen.

Die Erfindung wird im folgenden in nicht-beschränkender Weise anhand einiger Ausführungsbeispiele näher erläutert. In den beiliegenden Zeichnungen zeigen:
Fig. 1 einen radialen Querschnitt einer erfindungsgemäßen Kabelführungseinrichtung;
Fig. 2 eine perspektivische Ansicht einer erfindungsgemäßen Kabelführungseinrichtung nach Fig. 1;
Fig. 3 einen alternativen Kabelführungsformkörper aus Metalldraht;
Fig. 4 eine perspektivische Ansicht eines Kabelführungsformkörpers aus der erfindungsgemäßen Kabelführungseinrichtung nach Fig. 1;
Fig. 5a eine mit einem Getriebe versehene Ausführungsform einer erfindungsgemäßen Kabelführungseinrichtung in Radialschnittdarstellung;
Fig. 5b die in Fig. 5a gezeigte Ausführungsform in auseinandergezogener Darstellungsform;
Fig. 6 eine Radialschnittansicht eines Unterteils der Ausführungsform nach Fig. 5a längs eines Schnittes unter einem ersten Radialwinkel;
Fig. 7 eine Schnittansicht wie in Fig. 6, jedoch längs eines Schnittes unter einem anderen Radialwinkel;
Fig. 8 eine Draufsicht von oben auf das in den Fig. 6 und 7 gezeigte Unterteil;
Fig. 9 eine Draufsicht von unten auf ein Oberteil der in Fig. 5a gezeigten Ausführungsform;
Fig. 10 eine Radialschnittansicht des in Fig. 9 gezeigten Oberteils unter einem ersten Radialwinkel;
Fig. 11 einen Schnitt wie in Fig. 10, jedoch mit einem anderen Radialschnittwinkel;
Fig. 12 ein Detail des in den Fig. 9-11 gezeigten Oberteils;
Fig. 13 eine Draufsicht auf einen Kabelführungsformkörper der in Fig. 5a gezeigten Ausführungsform;
Fig. 14 eine Radialschnittansicht des in Fig. 13 gezeigten Kabelführungsformkörpers;
Fig. 15 eine Draufsicht von unten auf den in Fig. 13 gezeigten Kabelführungsformkörper;
Fig. 16 schematisch das bei der Ausführungsform nach Fig. 5a verwendete Getriebe;
Fig. 17 ein Zahnrad des bei der Ausführungsform nach Fig. 5a verwendeten Getriebes in Draufsicht;
Fig. 18 eine Seitenansicht des in Fig. 17 gezeigten Zahnrads;
Fig. 19 eine Dichtung in Draufsicht;
Fig. 20 die Dichtung in Seitenansicht;
Fig. 21 eine perspektivische Ansicht der Unterseite einer Spiralkabeldose nach dem Stand der Technik; und
Fig. 22 eine perspektivische Ansicht der Oberseite der bekannten Spiralkabeldose aus Fig. 21.

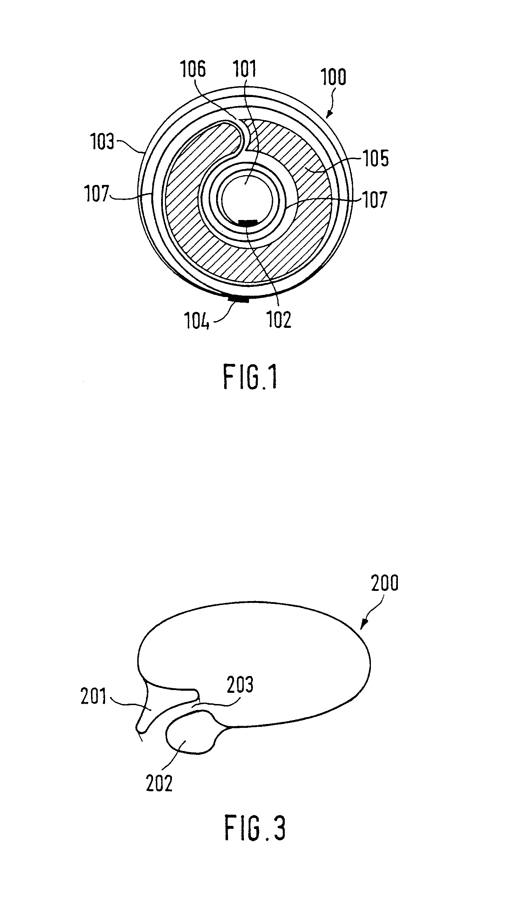

Fig. 1 zeigt einen radialen Querschnitt einer erfindungsgemäßen Kabelführungseinrichtung 100 mit einem zur Drehachse konzentrischen Innenring 101 und einem dem Innenring 101 zugeordneten Kabeleinlaß 102 sowie mit einem zur Drehachse konzentrischen Außenring 103, der um den Innenring 101 herum angeordnet ist und einem dem Außenring 103 zugeordneten Kabelauslaß 104. Der Innenring 101 und der Außenring 103 sind relativ zueinander um die Drehachse verdrehbar. Ein zur Drehachse zentrierter, im wesentlichen kreisringförmiger Kabelführungsformkörper 105, gleitet um die Drehachse drehbar zwischen dem Innenring 101 und dem Außenring 103, wobei der Kabelführungsformkörper 105 einen von seinem Innendurchmesser zu seinem Außendurchmesser führenden Kabelführungsspalt 106 aufweist, und wobei das Kabel 107 ausgehend vom Kabeleinlaß 102 zwischen dem Innenring 102 und dem Kabelführungsformkörper 105, durch den Kabelführungsspalt 106 hindurch und zwischen dem Außenring 103 und dem Kabelführungsformkörper 105 zum Kabelauslaß 104 geführt ist. Dabei kann das Kabel 107 in mehreren Lagen innerhalb und/oder außerhalb des Kabelformkörpers 105 aufgewickelt sein.

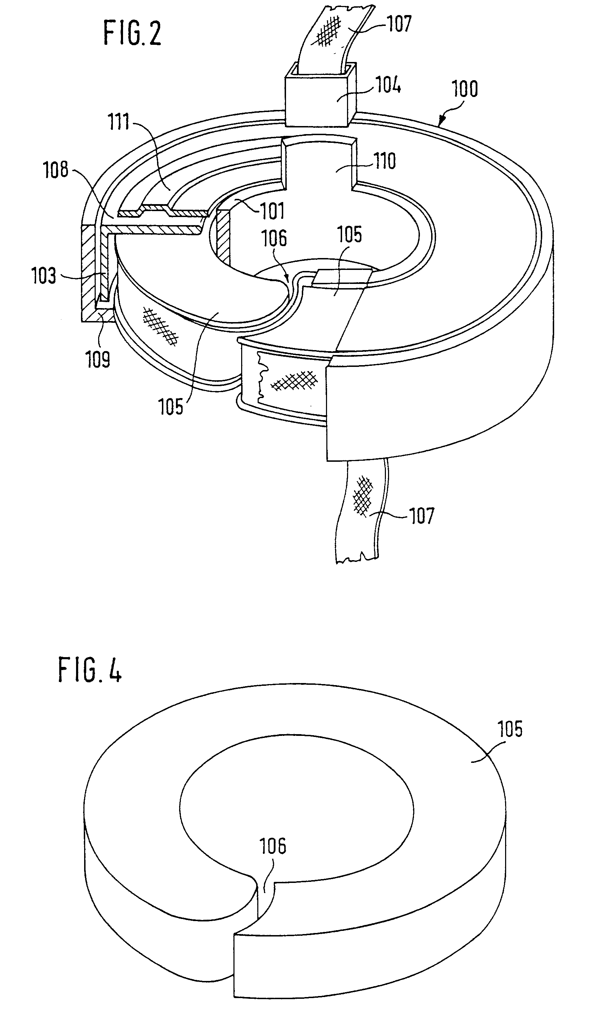

Fig. 2 zeigt eine angeschnittene perspektivische Ansicht einer erfindungsgemäßen Kabelführungseinrichtung nach Fig. 1, wobei die der Fig. 1 entsprechenden Merkmale mit den gleichen Bezugszeichen versehen sind und der Verlauf des Kabels 107 im Bereich des Spaltes 106 und Einzelheiten des Spaltes 106 sichtbar werden. Die Oberseite des Kabelführungsformkörpers 105 ist durch eine obere Ringscheibe 108 abgedeckt, wohingegen die Unterseite des Kabelführungsformkörpers 105 durch eine untere Ringscheibe 109 abgedeckt ist. Es besteht auch die Möglichkeit, den Kabelführungsformkörper 105 mit einer der beiden Ringscheiben 108 und 109 einstückig auszubilden. Ein an einer Stirnseite des Innenringes 101 angeordneter Vorsprung 110 dient als Rücksteller für Blinkerhebel etc. (nicht dargestellt). Ein elektrischer Schleifring 111 dient zum Anschluß eines Hupenkontaktes am Lenkrad.

Fig. 3 zeigt einen alternativen Kabelführungsformkörper 200 aus Metalldraht, der ösenförmig gebogene Enden 201, 202 aufweist, die zweckmäßig derart geformt sind, daß zwischen beiden ein Kabelführungsspalt 203 besteht. Der Metalldraht kann biegeschlaff aus einem wenig elastischen Material oder aus elastischem Federstahl gefertigt werden.

Fig. 4 zeigt eine perspektivische Ansicht eines Kabelführungsformkörpers 105 mit einem in Kabelführungsrichtung im wesentlichen halbkreisförmig ausgebildeten Kabelführungsspalt 106. Der Kabelführungsformkörper105 kann zur Einsparung von Gewicht und Material als Hohlkörper ausgeführt werden. Er kann auch unterteilt sein

Als Herstellungsverfahren kommen insbesondere Polyamid-Spritzgußverfahren in Frage. Polyamide sind besonders geeignet, da aus diesem Material gefertigte Kabelführungsformkörper 105 im Zusammenwirken mit den üblichen Materialien, die für Spiralkabeldosen verwendet werden, günstige akustische Schwingungs- und Dämpfungseigenschaften aufweisen, was zu einer geringeren Klapperneigung beim Einsatz der Kabelführungsvorrichtung in Kraftfahrzeugen führt.

Um den mechanischen Reibungswiderstand beim Gleiten des Kabelführungsformkörpers 105 zwischen Innenring 101 und Außenring 103 sowie zwischen den als Deckelplatten dienenden Ringscheiben 108,109 zu vermindern, ist es zweckmäßig, daß der Kabelführungsformkörper 105 an seiner Oberfläche mit vorspringenden kleinflächigen Auflagepunkten (nicht dargestellt) versehen wird, damit die Reibung auf eine Kleinere Oberfläche beschränkt wird.

Bei der vorausgehend betrachteten Ausführungsform ist der Kabelführungsformkörper 105 auf der unteren Ringscheibe 109 mittels Gleitlagerung verdrehbar gehalten. Dabei wird der Kabelführungsformkörper 105 durch die bei einer relativen Verdrehung von Außenring 103 und Innenring 101 zueinander entstehende Bewegung des zwischen Außenring 103 und Innenring 101 befindlichen Kabelbereichs bewirkt. D.h., die Antriebskraft für die Drehbewegung des Kabelführungsformkörpers wird unter anderem über das Kabel aufgebracht.

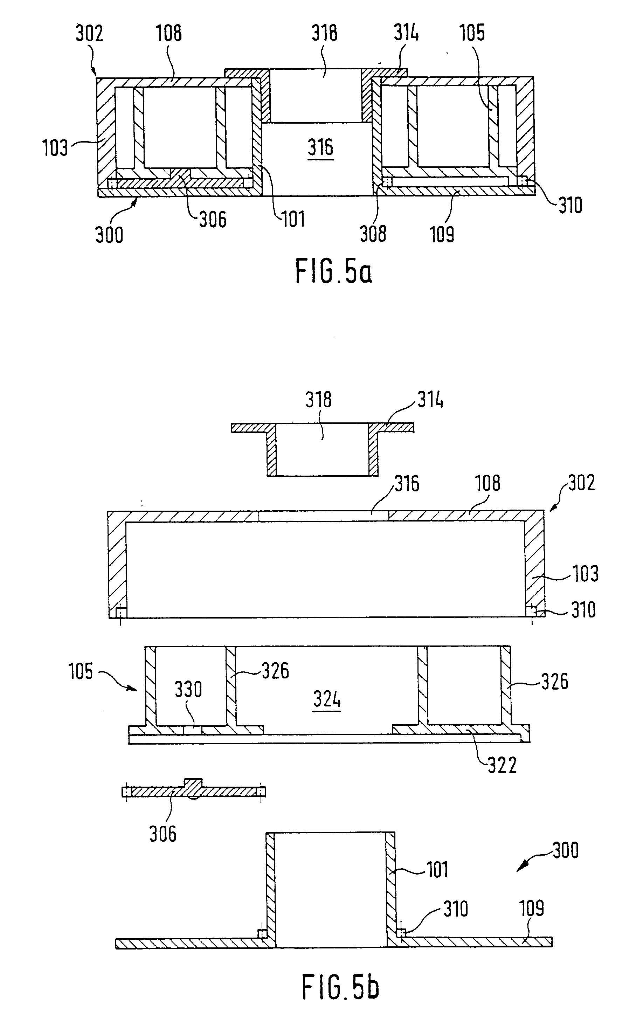

Bei einer anderen Ausführungsform, wie sie nun anhand der Fig. 5-20 erläutert wird, wird der Kabelführungsformkörper 105 mit Hilfe eines Planetengetriebes gedreht, über welches die relative Drehbewegung zwischen Außenring 103 und Innenring 101 einen Drehantrieb für den Kabelführungsformkörper 105 bewirkt. Dadurch wird das Kabel entlastet, weil der Kabelführungsformkörper 105 nun nicht mehr vom Kabel mitgenommen werden muß, sondern zwangsweise durch die von außen auf die Kabelführungseinrichtung ausgeübte Drehbewegung mitbewegt wird. Wird die erfindungsgemäße Kabelführungseinrichtung für eine Airbag-System verwendet, wird die relative Drehbewegung zwischen unterer Ringscheibe 109 und oberer Ringscheibe 108 durch Verdrehen des Lenkrades bewirkt.

Diese Ausführungsform ist somit besonders schonend für das im Kabelaufnahmeraum der Kabelführungseinrichtung befindliche Kabel.

Fig. 5a zeigt eine Radialschnittansicht dieser Ausführungsform in zusammengebauten Zustand. Fig. 5b zeigt diese Ausführungsform in auseinandergezogenem Zustand seiner Bauteile. Dabei sind die untere Ringscheibe 109 und der Innenring 101 zu einem einstückigen Unterteil 300 zusammengefaßt. Gleichermaßen sind die obere Ringscheibe 108 und der Außenring 103 zu einem einstückigen Oberteil 302 zusammengefaßt. Zwischen Unterteil 300 und Oberteil 302 befindet sich der Kabelführungsformkörper 105. Dieser weist an seiner zum Unterteil 300 weisenden Unterseite einen Außenring 304 auf, dessen Durchmesser größer ist als der des restlichen Teils des Kabelführungsformkörpers 105. Zwischen der zum Unterteil 300 weisenden Unterseite des Außenrings 304 und der Oberseite des Unterteils 300 befindet sich ein Zahnrad 306. Der Innenring 101 ist im Übergangsbereich zwischen dem Innenring 101 und der unteren Ringscheibe 109 an seinem Außenumfang mit einem Innenzahnkranz 308 versehen. Der Außenring 103 weist an seinem zum Unterteil 300 weisenden unteren Ende an seinem Innenumfang einen Außenzahnkranz 310 auf. In dem in Fig. 5a gezeigten Zusammenbauzustand kämmt das Zahnrad 306 sowohl mit dem Innenzahnkranz 308 als auch mit dem Außenzahnkranz 310. Das Zahnrad 306 weist eine Nabe 312 auf, mittels welcher das Zahnrad 306 an der Unterseite des Kabelführungsformkörpers 105 verdrehbar befestigt ist. Die von der Nabe abgelegene Unterseite des Zahnrads 306 liegt im Zusammenbauzustand der Kabelführungseinrichtung auf der unteren Ringscheibe 109 auf. Um die Auflagereibung des Zahnrades 306 Klein zu halten, kann man es auf seiner Unterseite mit einem zentralen, nadelspitzenförmigen Vorsprung 313 versehen. Dies führt zu einer reibungsarmen punktuellen Auflage des Zahnrades 306 auf der Ringscheibe 109.

Im Zusammenbauzustand werden die bisher beschriebenen Teile der in Fig. 5a gezeigten Kabelführungseinrichtung mittels eines zylindrischen Klemmkörpers 314 zusammengehalten, der durch eine Deckenöffnung 316 in der oberen Ringscheibe 108 des Oberteils 302 hindurch in den Innenzylinderraum des Innenrings 101 einklemmbar ist. Innerhalb des Klemmkörpers 314 und des Innenrings 101 bleibt eine Durchstecköffnung zum Beispiel für den Lenkstock eines Kraftfahrzeuglenkrads. Die einzelnen Teile der Kabelführungseinrichtung können auch durch andere Verrastungs- oder Verbindungsmittel aneinandergehalten werden. Der Klemmkörper 314 ist dann nicht erforderlich.

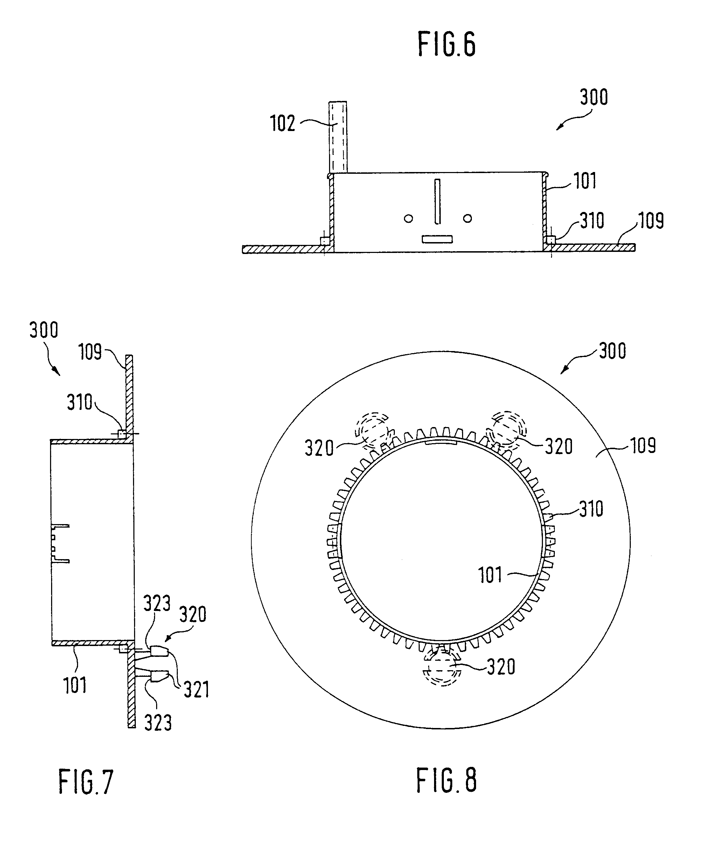

Die einzelnen Teile der in Fig. 5a gezeigten Kabelführungseinrichtung werden nun noch anhand der Fig. 6-20 näher betrachtet.

Das Unterteil 300 ist in den Fig. 6-8 im einzelnen dargestellt. Die Fig. 6 und 7 zeigen Radialschnittansichten unter unterschiedlichen Radialwinkeln. Bei dem Radialschnitt der Fig. 6 ist ein Kabeleinlaß 102 sichtbar. Bei der Radialschnittansicht der Fig. 7 ist eines von drei umfangsmäßig verteilten Rastbefestigungselementen 320 in Seitenansicht zu sehen. Mit den Rastbefestigungselementen 320, die federnde Rastarme 321 aufweisen, kann das Unterteil 300 an einer Tragvorrichtung festgeklemmt werden, beispielsweise an einer feststehenden Tragplatte, die den Lenkstock eines Kraftfahrzeuglenkrades umgibt.

Fig. 8 zeigt das Unterteil in Draufsicht von oben, wobei der Außenzahnkranz 310 besonders gut zu sehen ist.

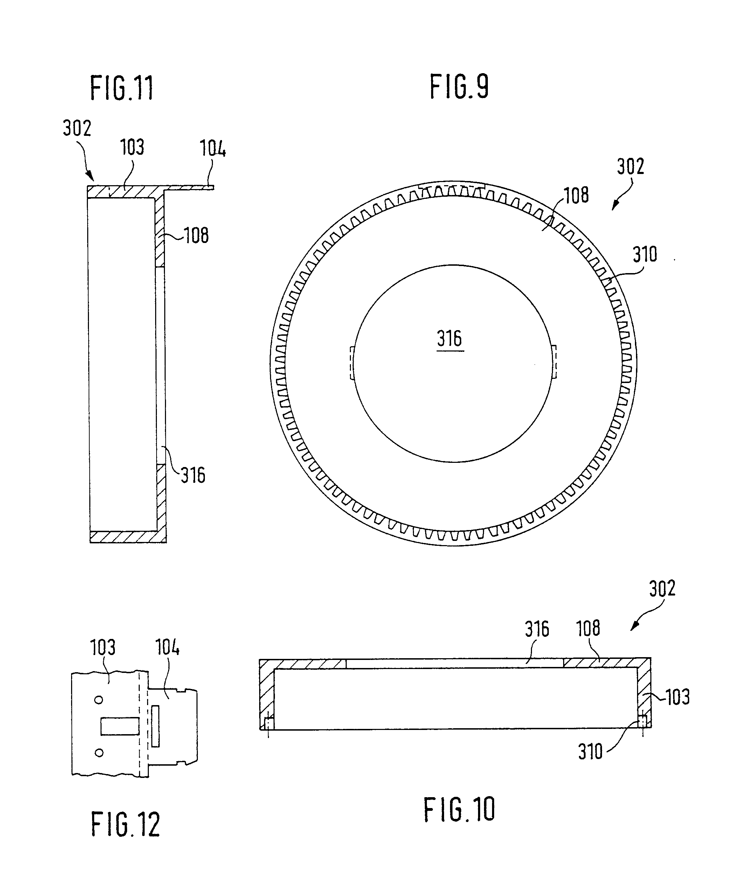

Die Fig. 9-12 zeigen das Oberteil 302 der in Fig. 5a gezeigten Ausführungsform. Fig. 9 zeigt eine Draufsicht von unten, wobei man den Außenzahnkranz 310 besonders gut sehen kann. Die Fig. 10 und 11 zeigen Radialschnittansichten des Oberteils 302 unter verschiedenen Radialwinkeln. In der Darstellung von Fig. 11 sieht man einen Kabelauslaß 104. Fig. 12 zeigt einen Ausschnitt des Oberteils 302 mit einer Draufsicht auf den Kabelanschluß 104.

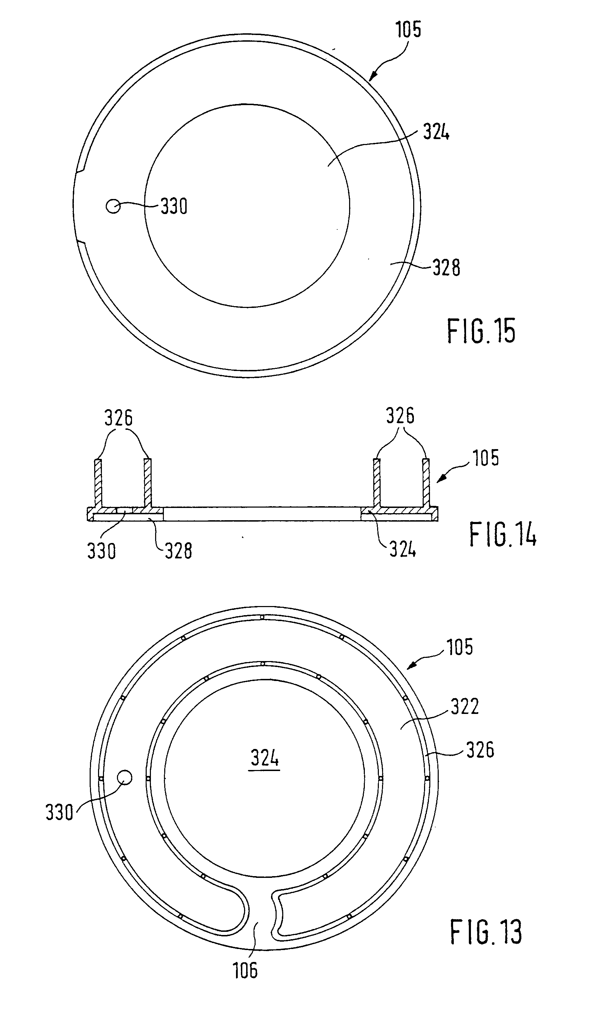

Der Kabelführungskörper 105 ist in den Fig. 13-15 dargestellt. Fig. 13 zeigt eine Draufsicht von oben. In Fig. 14 ist eine Radialschnittansicht zu sehen. Fig. 15 zeigt eine Draufsicht von unten.

Wie alle drei Fig. 13-15 zeigen, ist der Kabelführungsformkörper 105 als Vollringkörper ausgebildet, der einen Ringplattenteil 322 mit einer Ringöffnung 324 aufweist, von dessen zum Oberteil 302 weisender Oberseite eine in sich geschlossene Formkörperrippe 326 absteht, derart, daß ein Kabelführungsspalt 106 offenbleibt. Wie die Fig. 14 und 15 zeigen, ist an der zum Unterteil 300 weisenden Unterseite des Ringplattenteils 322 eine ringförmige Ausnehmung 328 gebildet. Der Ringplattenteil 322 ist an einer Umfangswinkelstelle mit einer Durchgangsöffnung 330 versehen, die zur Aufnahme eines Nabenschaftes 312 des Zahnrads 306 dient. Der Nabenschaft 312 des Zahnrads 306 wird derart an dem Ringplattenteil 322 angeordnet, daß das Zahnrad 306 relativ zum Ringplattenteil 322 drehbar ist.

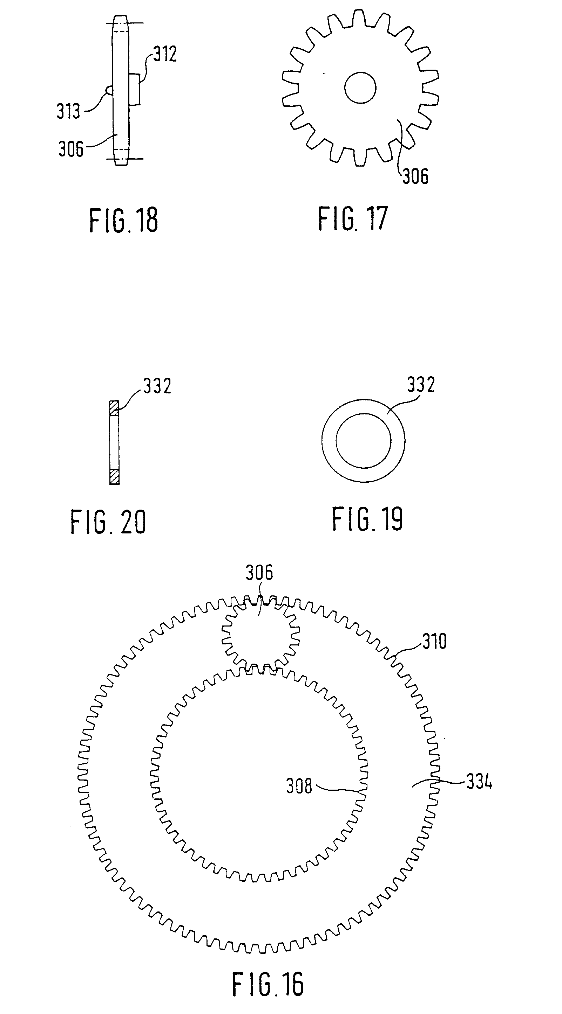

Fig. 16 zeigt lediglich das Zahnrad 306, den Innenzahnkranz 308 und den Außenzahnkranz 310. Die beiden Zahnkränze 308 und 310 bilden eine zur Drehachse der Kabelführungseinrichtung konzentrische Zahnnut 334, deren durch die Zahnkränze 308 und 310 gebildete Nutzahnränder beide mit den Zähnen des Zahnrads 306 kämmen. Bei einer Relativbewegung zwischen den Zahnkränzen 308 und 310 kommt es einerseits zu einer Drehung des Zahnrades 306 um seine eigene Achse und andererseits um eine Ringbahnbewegung des Zahnrads 306 innerhalb der Zahnnut 334.

Das Zahnrad ist in Fig. 17 in Draufsicht und in Fig. 18 in Seitenansicht gezeigt.

Die Fig. 19 und 20 zeigen in Draufsicht bzw. in Seitenansicht eine ringförmige Federringscheibe 332. Die Rastfederarme 321 haben eine derartige Länge, daß sie durch Rastlöcher in einer (nicht dargestellten) Tragplatte hindurchreichen, an welcher die Kabelführungseinrichtung befestigt werden soll. Diese Tragplatte kann am Lenkrad oder am Lenkstock einer Kraftfahrzeuglenkung angeordnet sein. Die Rastfederarme 321 weisen im Bereich ihrer freien Enden Rastschultern 323 auf. Wenn die Kabelführungseinrichtung auf der Tragplatte befestigt ist, sollen die Rastschultern 323 die von der unteren Ringscheibe 109 abliegende Seite der Tragplatte verrastend hintergreifen.

An den Lenkrädern oder Lenkstöcken von Kraftfahrzeuglenkungen sind Tellerflächen vorhanden, die aufgrund großzügiger Toleranzen häufig eine Welligkeit aufweisen. Um solche toleranzbedingten Welligkeiten auszugleichen und Klappergeräusche zu vermeiden, werden die Rastfederarme 321 vorzugsweise mit einer solchen Länge ausgestattet, daß bei Montage der Kabelführungseinrichtung auf der Tragplatte zwischen der von der unteren Ringscheibe 109 abgelegenen Seite der Tragplatte und den Rastschultern 323 noch Platz für eine Federringscheibe 332 (Fig. 19 und 20) aus elastischem Material ist. Mit diesen Dichtungen auf den in Fig. 8 drei Rastfederarmpaaren können axiale Toleranzen ausgeglichen werden.

## Patentansprüche

1. Kabelführungseinrichtung (100) zum Führen eines Kabels (107) von einer ortsfesten Einrichtung zu einer um eine Drehachse schwenkbaren Einrichtung, aufweisend:
a) einen zur Drehachse konzentrischen Innenring (101) und einen dem Innenring zugeordneten inneren Kabeldurchlaß (102),
b) einen zur Drehachse konzentrischen Außenring (103), der um den Innenring (101) herum angeordnet ist, und einen dem Außenring (103) zugeordneten äußeren Kabeldurchlaß (104),
c) wobei der Innenring (101) und der Außenring (103) relativ zueinander um die Drehachse verdrehbar sind,
gekennzeichnet durch
d) einen zur Drehachse zentrierten, im wesentlichen kreisringförmigen Kabelführungsformkörper (105;200), der zwischen dem Innenring (101) und dem Außenring (103) um die Drehachse verdrehbar gelagert ist;
e) wobei der Kabelführungsformkörper (105;200) einen von seinem Innendurchmesser zu seinem Außendurchmesser führenden Kabelführungsspalt (106;203) aufweist, und
f) wobei das Kabel (107) ausgehend vom inneren Kabeldurchlaß (102) zwischen dem Innenring (101) und dem Kabelführungsformkörper (105;200), durch den Kabelführungsspalt (106;203) hindurch und zwischen dem Außenring (103) und dem Kabelführungsformkörper (105; 200) zum äußeren Kabeldurchlaß (104) geführt ist.

2. Kabelführungseinrichtung nach Anspruch 1, dadurch gekennzeichnet, daß der Kabelführungsspalt (106;203) in der Richtung der Kabelführung halbkreisförmig abgerundet ist.

3. Kabelführungseinrichtung nach Anspruch 1 oder 2, dadurch gekennzeichnet, daß der Kabelführungsformkörper (200) mit gebogenem Metalldraht aufgebaut ist.

4. Kabelführungseinrichtung nach Anspruch 1 oder 2, dadurch gekennzeichnet, daß der Kabelführungsformkörper (105) als Hohlkörper ausgeführt ist.

5. Kabelführungseinrichtung nach Anspruch 1,2 oder 4, dadurch gekennzeichnet, daß der Kabelführungsformkörper (105) aus Polyamid besteht.

6. Kabelführungseinrichtung nach einem der Ansprüche 1, 2,4 oder 5, dadurch gekennzeichnet, daß der Kabelführungsformkörper (105) an seiner Oberfläche vorspringende Auflagepunkte aufweist.

7. Kabelführungseinrichtung nach einem der Ansprüche 1 bis 6,
dadurch gekennzeichnet,
daß der Innenring (101) und die untere Ringscheibe (109) einstückig zu einem Unterteil (103) zusammengefaßt sind.

8. Kabelführungseinrichtung nach einem der Ansprüche 1 bis 7,
dadurch gekennzeichnet,
daß der Außenring (103) und die obere Ringscheibe (108) einstückig zu einem Oberteil (302) zusammengefaßt sind.

9. Kabelführungseinrichtung nach einem der Ansprüche 1 bis 8,
dadurch gekennzeichnet,
daß der Kabelführungsformkörper (105) auf der unteren Ringscheibe (109) mittels Gleitlagerung verdrehbar gehalten ist.

10. Kabelführungseinrichtung nach einem der Ansprüche 1 bis 9,
dadurch gekennzeichnet,
daß der Kabelführungsformkörper (105) durch die bei einer relativen Verdrehung von Außenring (103) und Innenring (101) zueinander entstehende Bewegung des zwischen Außenring (103) und Innenring (101) befindlichen Kabelbereichs bewegt wird.

11. Kabelführungseinrichtung nach einem der Ansprüche 1 bis 9,
dadurch gekennzeichnet,
daß der Kabelführungsformkörper (105) mit Hilfe eines Getriebes (306, 308, 310) drehbar ist, über welches die relative Drehbewegung zwischen Außenring (103) und Innenring (101) einen Drehantrieb für den Kabelführungsformkörper (105) bewirkt.

12. Kabelführungseinrichtung nach Anspruch 11, dadurch gekennzeichnet,
daß das Getriebe (26, 308, 310) mindestens ein am Kabelführungsformkörper (105) drehbar gehaltenes Zahnrad (306) und mindestens eine zur Drehachse konzentrische, mit dem Zahnrad (306) kämmende ringförmige Zahnnut (334) zwischen dem Außenring (103) und dem Innenring (101) aufweist, wobei ein äußerer Nutzahnrand (310) der Zahnnut (334) mit dem Außenring (103) und ein innerer Nutzahnrand (308) mit dem Innenring (101) drehsteif verbunden ist, derart, daß sich die beiden Nutzahnränder (308, 310) bei einer relativen Drehbewegung zwischen Außenring (103) und Innenring (101) relativ zueinander drehen und dadurch das Zahnrad (306) in eine kreisbahnförmige Bewegung innerhalb der Zahnnut (334) versetzen.

13. Kabelführungseinrichtung nach Anspruch 12, dadurch gekennzeichnet,
daß der innere Zahnnutrand (308) durch einen auf dem Außenumfang des Innenrings (101) angeordneten Innenzahnkranz (308) und der äußere Zahnnutrand (310) durch einen auf dem Innenumfang des Außenrings (103) angeordneten Außenzahnkranz (310) gebildet sind.

14. Kabelführungseinrichtung nach Anspruch 12 oder 13,
dadurch gekennzeichnet,
daß die Zahnnutränder (308, 310) der zum Kabelaufnahmeraum hin weisenden Oberseite der unteren Ringscheibe (109) benachbart angeordnet sind und daß das Zahnrad (306) an der zur unteren Ringscheibe (109) weisenden Unterseite des Kabelführungsformkörpers (105) angeordnet ist.

15. Kabelführungseinrichtung nach einem der Ansprüche 1 bis 14,
dadurch gekennzeichnet,
daß an der unteren Ringscheibe (109) über deren Umfang verteilt mehrere Rastfederarme (321) angeordnet sind, die in Rastöffnungen einer Unterlage verrastbar sind, an welcher die Kabelführungseinrichtung befestigt werden soll.

16. Kabelführungseinrichtung nach Anspruch 15, dadurch gekennzeichnet,
daß die Rastfederarme (321) relativ zu der Dicke einer Tragplatte, an welcher die Kabelführungseinrichtung befestigt werden soll, eine derartige Länge aufweisen, daß an den freien Enden der Rastfederarme (321) befindliche Rastschultern (323), die von der unteren Ringscheibe (109) abgelegene Seite der Tragplatte verrastend hintergreifen können.

17. Kabelführungseinrichtung nach Anspruch 16, dadurch gekennzeichnet,
daß die Rastfederarme (321) eine derartige Länge haben, daß zwischen deren Rastschultern (323) und der von der unteren Ringscheibe (109) abgelegenen Seite der Tragplatte elastische Federringscheiben (332) angeordnet werden können.

18. Verwendung einer Kabelführungseinrichtung (100) nach einem der vorstehenden Ansprüche zum Schaffen eines elektrischen Anschlusses einer in einem Lenkrad drehbar untergebrachten Airbag-Einheit an eine karosseriefest angeordnete Airbag-Steuereinheit, wobei die Kabelführungseinrichtung (100) zwischen Lenkrad und Lenkstock im Lenkstock oder im Lenkrad selbst angeordnet ist.
